# EUROPÄISCHE PATENTANMELDUNG

(11) **EP 1 276 166 A2**
(43) Veröffentlichungstag der Anmeldung: **15.01.2003**
(21) Anmeldenummer: 02010543.3
(22) Anmeldetag: 10.05.2002
(51) Int. Cl.: H01M 10/48, G01R 31/36

(54) **Elektrischer Akkumulator mit in dem Akkumulatorenbehälter integrierter elektronischer Schaltung**

(30) Priorität: 08.07.2001 DE 10135067
(71) Anmelder: VB Autobatterie GmbH, 30419 Hannover (DE)
(72) Erfinder: Koch, Ingo, 31789 Hameln (DE); Schreiber, Martin, 31249 Hohenhameln (DE)
(74) Vertreter: Lins, Edgar, Dipl.-Phys. Dr.jur.

(57) **Zusammenfassung**

Bei einem elektrischen Akkumulator mit in dem Akkumulatorenbehälter integrierter elektronischer Schaltung zur Funktionsüberwachung ist im Akkumulator (1) eine Vorrichtung zur Messung der Akkumulatorspannung (3a,3b), eine Vorrichtung zur Messung der Akkumulatortemperatur (4) und eine Vorrichtung, die die Stromrichtung mittels einer Messvorrichtung am Polschaft detektiert, angeordnet. Die elektronische Schaltung (2) enthält einen Mikroprozessor, der aus diesen Eingangsgrößen den Ladezustand und/oder die Gebrauchsfähigkeit des Akkumulators errechnet und die errechneten Ausgangswerte sind über eine Vorrichtung zur Kommunikation weiterleitbar.

Die Stromrichtung wird mittels des Abgriffs einer Teilspannung am Polschaft oder mittels des Magnetfelds detektiert, das vom Stromfluss durch den Polschaft erzeugt wird.

Auf dem Akkumulatorenbehälter ist eine optische Anzeige (6) angeordnet, die über die Vorrichtung zur Kommunikation ansteuerbar ist und die Information über den Ladezustand und/oder Gebrauchsfähigkeit anzeigt.

## Beschreibung

Gegenstand der Erfindung ist ein elektrischer Akkumulator mit in dem Akkumulatorenbehälter integrierter elektronischer Schaltung zur Funktionsüberwachung.

Entladene oder nicht mehr gebrauchsfähige Akkumulatoren sind eine der Hauptursachen für Pannen von Kraftfahrzeugen ist. Daher besteht Bedarf nach einem Akkumulator, der sich selbst überwacht und rechtzeitig warnt, wenn er voraussichtlich nicht mehr in der Lage ist, die Anforderungen im Fahrzeug zu erfüllen. Die Implementierung einer solchen Überwachung direkt auf dem Akkumulator hat gegenüber einer fahrzeugseitig vorgesehenen Elektronik den Vorteil, dass sie unabhängig von Fahrzeughersteller und Fahrzeugalter jedem zu Verfügung steht.

Bekannt sind Akkumulatoren mit integrierter Spannungsmessung zur Überwachung des Batteriezustandes. Beispielsweise beschreibt das Dokument DE 198 34 740 A1 ein Verfahren zur Batterieüberwachung mit einer integrierten elektronischen Überwachungseinrichtung mit Batterietemperaturmessung, Außentemperaturmessung, Zeiterfassung und Speichervorrichtungen.

Der Druckschrift DE 44 06 193 A1 ist eine Akkumulatorenbatterie zu entnehmen, die als Funktionskontrolle einen akustischen Signalgeber enthält, der von einer einen Zustandswert der Akkumulatorenbatterie erfassenden Messvorrichtung ansteuerbar ist. Signalgeber und Messvorrichtung sind in einem gemeinsamen, auf den Akkumulator aufsteckbaren Gehäuse angeordnet.

Dem deutschen Patent DE 3331360 ist eine Akkumulatorenbatterie zu entnehmen, die einen in Gehäusewand oder Gehäusedeckel integrierten elektronischen Baustein zur Funktionsüberwachung enthält, der insbesondere eine elektronische Uhr ist.

Aufgabe der Erfindung ist es einen Akkumulator anzugeben, der eine im Akkumulatorenbehälter integrierte elektronische Schaltung zur Funktionsüberwachung aufweist, die auch dazu geeignet ist, den Ladezustand und/oder die Gebrauchsfähigkeit des Akkumulators zu bestimmen.

Diese Aufgabe wird erfindungsgemäß bei einem Akkumulator der eingangs genannten Gattung durch die kennzeichnenden Merkmale des Anspruchs 1 gelöst. In den Unteransprüchen sind vorteilhafte Ausgestaltungen der Erfindung angegeben.

Erfindungsgemäß wird durch eine Information über den Batteriestrom eine verbesserte Aussage über den Akkumulatorenzustand erreicht als es nur mit einer Spannungsmessung möglich ist. Dabei ist insbesondere eine Information über den Stromrichtungswechsel bereits ausreichend. In der deutschen Patentanmeldung 100 49 495.1 werden beispielweise entsprechende Algorithmen zur Batteriezustandserkennung beschrieben.

Beim erfindungsgemäßen Akkumulator werden diese Algorithmen losgelöst vom Fahrzeug auf der Batterie selbst durchlaufen und die Ergebnisse werden dem Fahrer mitgeteilt.

Die Vorrichtung zur Batterieüberwachung gemäß der Erfindung macht gegenüber einer handelsüblichen Batterie nur Änderungen im Deckel erforderlich, so dass die Einflüsse auf das Batterieverhalten und die Herstellkosten gering gehalten werden.

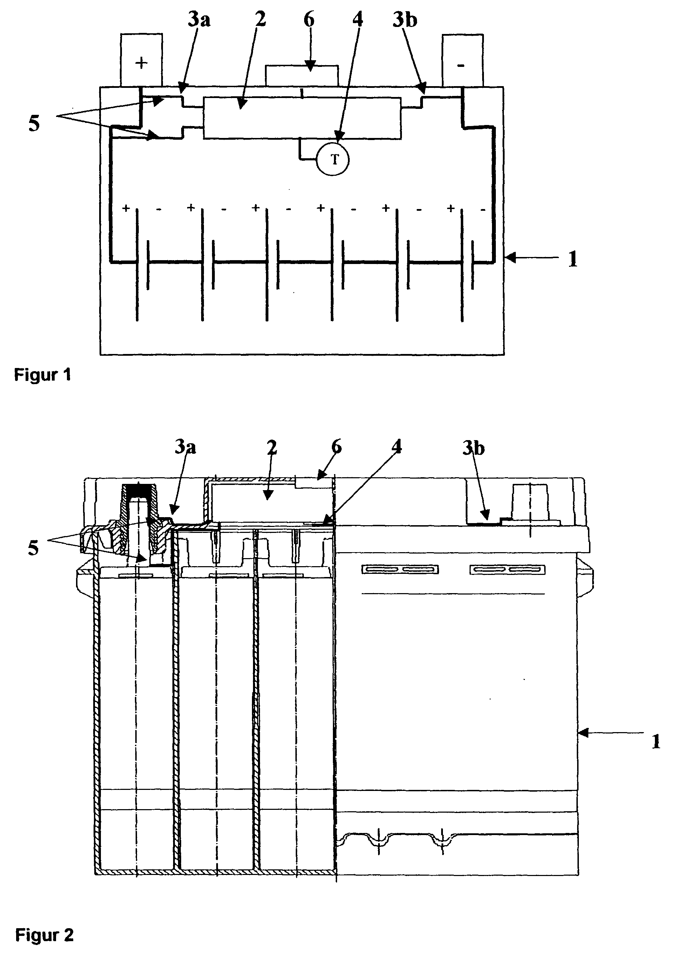

Im Folgenden ist der Gegenstand der Erfindung anhand der Figuren 1 und 2 näher erläutert.

In Figur 1 ist der Aufbau eines erfindungsgemäßen 12V Akkumulators schematisch dargestellt. Figur 2 zeigt einen Schnitt durch einen erfindungsgemäß ausgestatteten Akkumulator.

Die Messung der Spannung des Akkumulators 1 erfolgt zwischen beiden Batteriepolen 3a, 3b, die Messung der Temperatur erfolgt über eine Sonde 4 außerhalb des Elektrolytraumes, um die Korrosion des Messfühlers und einen Säureaustritt durch die Kabeldurchführung auszuschließen. Weiterhin ist ein Mikrokontroller 2 vorgesehen, der die Messwerte interpretiert und daraus eine Aussage über den Batteriezustand trifft. Um dem Fahrer den aktuellen Zustand der Batterie mitzuteilen, ist eine Schnittstelle zur Kommunikation vorgesehen. Ein Vorteil der Erfindung ist, dass keine Sensoren im Elektrolyten angeordnet sind und dadurch der Einfluss auf die elektrischen Eigenschaften der Batterie vernachlässigbar ist.

Erfindungsgemäß ist im Akkumulator eine Vorrichtung zur Überwachung der Stromrichtung integriert. Damit können die vorliegenden Betriebszustände, wie Batteriespannung, Batterietemperatur getrennt nach Entladung und Ladung bewertet werden. Erfindungsgemäß wird dafür ein Abschnitt 5 des Polschafts verwendet, an dem der Spannungsabfall gemessen und der Wechsel des Vorzeichens für die Spannungsdifferenz als Signal für den Vorzeichenwechsel des Stroms genutzt wird. Diese Spannungsdifferenz kann ebenso auch zur Abschätzung des fließenden Stroms besonders bei hohen Strömen verwendet werden.

Eine weitere Möglichkeit, die Stromrichtung zu erkennen, kann durch die Überwachung des Magnetfeldes an einem stromführenden Leiter des Akkus realisiert werden. Je nach Stromrichtung hat das Magnetfeld ein anderes Vorzeichen. Durch Magnetfeldsensoren kann das Magnetfeld gemessen und die Stromrichtung detektiert werden. Durch die Installation eines Hall-Schalters wird direkt bei Änderung des Magnetfeldvorzeichens bzw. der Stromrichtung ein Signal ausgelöst. Vorzugsweise wird ein entsprechender Sensor bzw. Schalter direkt am Polschaft angeordnet und im Deckel integriert.

Die ermittelten Aussagen zum Ladezustand und zur Leistungsfähigkeit der Batterie werden dem Fahrer über eine Vorrichtung zur Kommunikation mitgeteilt.

Diese kann eine Anzeige 6 auf der Batterie sein, die mit einem LC-Display oder mit LEDs versehen ist. Daneben ist eine Funkübertragung, die die Signale auf eine Anzeigevorrichtung überträgt, eine Übertragung der Signale über einen Datenbus, eine Übertragung über einen Ultraschallsender, dessen Signal die Informationen über den Batteriezustand enthält und von einer externen Anzeigevorrichtung empfangen und angezeigt wird, möglich

Im Rahmen der Erfindung liegt auch, eine Übertragung über eine Transpondereinheit vorzusehen, wobei die Transponder-Basisstation mit Antenne zur Abfrage in die Anzeigevorrichtung, welche die Information über den Ladezustand bzw. Gebrauchsfähigkeit anzeigt, integriert ist oder es kann eine Übertragung über das Leistungskabel über Plus- und Minuspol des Akkumulators erfolgen, wobei die Anzeigevorrichtung, welche die Information über den Ladezustand bzw. Gebrauchsfähigkeit anzeigt, mittels einer Steckvorrichtung über den Zigarettenanzünder im Kraftfahrzeug mit Energie und Daten versorgt wird.

Es kann auch vorgesehen werden, die Information über den Ladezustand bzw. Gebrauchsfähigkeit durch ein akustisches Signal, wie durch verschieden schnelle Tonfolgen, dem Fahrer mitzuteilen.

In Figur 2 sind die erfindungsgemäßen Messvorrichtungen in einer üblichen Batteriegarnitur dargestellt. Alle zusätzlichen zur Erfindung gehörenden Teile sind in den Deckel integriert, ohne dass am Polschaft oder anderen Batterieteilen Änderungen vorgenommen werden müssen.

## Patentansprüche

1. Elektrischer Akkumulator mit in dem Akkumulatorenbehälter integrierter elektronischer Schaltung zur Funktionsüberwachung, **dadurch gekennzeichnet, dass** im Akkumulator (1) eine Vorrichtung zur Messung der Akkumulatorspannung (3a,3b), eine Vorrichtung zur Messung der Akkumulatortemperatur (4) und eine Vorrichtung, die die Stromrichtung mittels einer Messvorrichtung am Polschaft detektiert, angeordnet sind, und dass die elektronische Schaltung (2) einen Mikroprozessor enthält, der aus diesen Eingangsgrößen den Ladezustand und/oder die Gebrauchsfähigkeit des Akkumulators errechnet und dass die errechneten Ausgangswerte über eine Vorrichtung zur Kommunikation weiterleitbar sind.

2. Elektrischer Akkumulator nach Anspruch 1, **dadurch gekennzeichnet, dass** die Vorrichtung zur Detektion der Stromrichtung, die Stromrichtung mittels des Abgriffs einer Teilspannung am Polschaft detektiert.

3. Elektrischer Akkumulator nach Anspruch 1, **dadurch gekennzeichnet, dass** die Vorrichtung zur Detektion der Stromrichtung, die Stromrichtung mittels des Magnetfelds detektiert, das vom Stromfluss durch den Polschaft erzeugt wird.

4. Elektrischer Akkumulator nach einem der Ansprüche 1 bis 3, **dadurch gekennzeichnet, dass** auf dem Akkumulatorenbehälter eine optische Anzeige (6) angeordnet ist, die über die Vorrichtung zur Kommunikation ansteuerbar ist und die Information über den Ladezustand und/oder Gebrauchsfähigkeit anzeigt.

5. Elektrischer Akkumulator nach einem der Ansprüche 1 bis 3, **dadurch gekennzeichnet, dass** die Vorrichtung zur Kommunikation ein Funksender ist, der die Ausgangswerte auf eine extern angeordnete Anzeigevorrichtung übermittelt, die mit einer Vorrichtung zum Empfang des Signals ausgerüstet ist, und dass diese Anzeigevorrichtung die Information über den Ladezustand bzw. Gebrauchsfähigkeit anzeigt.

6. Elektrischer Akkumulator nach einem der Ansprüche 1 bis 3, **dadurch gekennzeichnet, dass** die Vorrichtung zur Kommunikation eine Datenbusschnittstelle ist, welche die Ausgangswerte auf einen angeschlossenen Datenbus ausgibt.

7. Elektrischer Akkumulator nach einem der Ansprüche 1 bis 3, **dadurch gekennzeichnet, dass** die Vorrichtung zur Kommunikation ein Ultraschallsender ist.

8. Elektrischer Akkumulator nach einem der Ansprüche 1 bis 3, **dadurch gekennzeichnet, dass** die Vorrichtung zur Kommunikation die Ausgangswerte des Algorithmus über das Leistungskabel über Plus- und Minuspol des Akkumulators ausgibt, und die Anzeigevorrichtung, welche die Information über den Ladezustand bzw. Gebrauchsfähigkeit anzeigt, eine Steckvorrichtung besitzt, welche über einen elektrischen Anschluss im Kraftfahrzeug mit Energie und Daten versorgt wird.
